# EUROPÄISCHE PATENTSCHRIFT

(11) **EP 1 319 581 B1**
(45) Veröffentlichungstag und Bekanntmachung des Hinweises auf die Patenterteilung: **08.08.2007**
(21) Anmeldenummer: 02025208.6
(22) Anmeldetag: 12.11.2002
(51) Int. Cl.: B62D 25/16

(54) **Kotflügel aus Kunststoff an Kraftfahrzeugen**
Plastic mud-guard for motor vehicles
Garde-boue en plastique pour véhicule automobile

(30) Priorität: 11.12.2001 DE 10160676
(43) Veröffentlichungstag der Anmeldung: 18.06.2003
(73) Patentinhaber: Volkswagen Aktiengesellschaft, 38436 Wolfsburg (DE)
(72) Erfinder: Kauss, Peter, 38442 Wolfsburg (DE); Urban, Eckhard, 38154 Königslutter (DE); Poschmann, Michael, 38165 Lehre (DE); Welsch, Frank, Dr., 38179 Schwülper (DE)

(56) Entgegenhaltungen:
- DE-A- 19 803 402
- DE-B- 1 192 936

## Beschreibung

Die Erfindung betrifft eine Anordnung eines Kotflügels aus Kunststoff und seiner Befestigungsmittel an Kraftfahrzeugen gemäß dem Oberbegriff des Anspruchs 1.

Kotflügel aus Kunststoff stellen seit langem bekannten Stand der Technik dar. Der Vorteil solcher Kotflügel besteht im wesentlichen in der einfachen und kostengünstigen Herstellung derselben sowie den nahezu unbegrenzten Möglichkeiten der Ausbildung der Außenkontur.

Gemäß der DE 30 07 760 C2 können die Kotflügel aus einem gegebenenfalls mit Glasfasern verstärktem Polyurethanharz oder aus einem flexiblen lagengeformten Polysterverbund hergestellt und mittels an sich bekannter Schraubverbindungen auf der Unterkonstruktion befestigt sein. Auch durch die DE 93 01 224.1 wird eine einfache Befestigung mittels Schrauben durch Schraubendurchtrittslöcher des Kotflügels hindurch an benachbarten Trägern des Kraftfahrzeugs, wie einem Frontquerträger und einer A-Säule offenbart. Aus der DE 197 11 794 A1 ist es bekannt, Karosserieaußenhautbauteile aus Kunststoff in Hinterspritztechnik herzustellen.

Als nachteilig an Karosserieaußenhautbauteilen aus Kunststoff hat sich der zur Fahrzeugkarosserie, welche derzeit überwiegend aus Metall hergestellt ist, unterschiedliche Wärmeausdehnungskoeffizient erwiesen. Unter Berücksichtigung dieses Umstandes sind die verschiedensten Konzepte zur Befestigung von Kotflügeln aus Kunststoff auf tragenden Bauteilen der metallenen Fahrzeugkarosserie bekannt geworden.

Mit der DE 40 10 453 A1 wurde eine Lösung offenbart, die ihrerseits vorsieht, den Randbereich eines Kotflügels, nämlich den vorderen, den hinteren und den oberen Bereich, auch Kotflügelbank bezeichnet, mittels eingebetteter oder aufgebrachter Stahlschienen derart verschiebesicher an der Fahrzeugkarosserie zu halten, dass sich der Kotflügel bei thermischer Ausdehnung nach außen beult. Als nachteilig wird hierbei eingeschätzt, dass dieses sogenannte Ausbeulen undefiniert erfolgt und der Kotflügel überwiegend unter erheblicher Spannung steht, die im Falle eines Crashes ein verstärktes Zersplittern des Kotflügels und weiträumiges Verstreuen der Splitter hervorruft.

Demgegenüber sind eine Vielzahl von Lösungsvorschlägen zur Befestigung von Karosserieaußenhautbauteilen aus Kunststoff bekannt, die die thermische Ausdehnung derselben nicht verhindern, sondern in Grenzen gewährleisten. Im wesentlichen werden hierzu mehr oder weniger komplizierte verschiebliche Befestigungselemente offenbart (EP 0 799 758 B1; EP 0 799 759 B1; US 4,707,020; US 5,098,765; US 5,429,412).

Aus der gattungsbildenden DE 1 192 936 B ist ein Karosserieteil aus Kunststoff wie ein Kotflügel bekannt, welcher Befestigungselemente aufweist, die einstückig mit dem Karosserieteil ausgebildet oder als eine aus dem eigentlichen Karosserieteil und den Befestigungselementen unlösbar zusammengesetzte Baueinheit gefertigt sind.

Aufgabe vorliegender Erfindung ist es, eine Anordnung eines Kotflügels aus Kunststoff und seiner Befestigungsmittel anzugeben, welche zum einen ein verbessertes, nämlich einfacher zu bewerkstelligendes und kostengünstigeres Befestigungskonzept aufweist und ferner der thermischen Ausdehnung des Kotflügels im Verhältnis zur metallenen Unterkonstruktion Rechnung trägt. Zum anderen sollen maßgebliche steifigkeitserhöhende und sicherheitstechnische Maßnahmen aufgezeigt werden.

Ausgehend von einer Anordnung eines Kotflügels aus Kunststoff und seiner Befestigungsmittel an Kraftfahrzeugen, bei der sich der Kotflügel mittels mechanischer Befestigungsmittel an der Kraftfahrzeugkarosserie abstützt und an dieser befestigt ist, wobei dem Kotflügel im Bereich einer Mehrzahl von Befestigungspunkten Verbindungs-, Führungs- und/oder Versteifungselemente zugeordnet sind, die ihrerseits als gesonderte und vorgefertigte Bauteile auf die Innenkontur des Kotflügels aufgeklebt oder auf die Innenkontur des Kotflügels aufgearbeitet, respektive aufgespritzt sind, wird die Aufgabe dadurch gelöst, dass der Kotflügel wenigstens ein stoßfängerseitiges und ein fahrzeugtürseitiges Verbindungselement aufweist, das stoßfängerseitige Verbindungselement in die Randzone des Kotflügels eingebracht und zur formschlüssigen Anbindung mittels Befestigungsschrauben an ein benachbartes Karosserieteil und an den Stoßfänger ausgebildet ist, das fahrzeugtürseitige Verbindungselement ebenfalls in die Randzone des Kotflügels eingebracht ist sowie zur Ausbildung eines Klemmelementes eine Aufnahme für ein in dasselbe eingreifendes Verhakungselement aufweist, welches fest an einem benachbarten Karosserieteil angeordnet ist, und dem Kotflügel fahrzeugtürseitig wenigstens ein Führungselement für eine stabile Einbaulage am Fahrzeug und zur Realisierung einer gleichmäßigen Fuge zur Fahrzeugtür zugeordnet ist.

In einer Ausgestaltung der Erfindung sind die Verbindungs-, Führungs- und/oder Versteifungselemente vorzugsweise aus Kunststoff und/oder Metall ausgebildet. Die Verbindungs-, Führungs- und/oder Versteifungselemente können sowohl vollflächig als auch teilbereichsweise auf die Innenkontur des Kotflügels aufgeklebt sein. Des Weiteren sind die Verbindungs-, Führungs- und/oder Versteifungselemente derart auf die Innenkontur des Kotflügels aufgeklebt, dass keine Abzeichnungen auf der Außenhaut des Kotflügels sichtbar sind.

In Weiterbildung der Erfindung sind der Kotflügel und/oder ein oder mehrere Verbindungselemente mit einer oder mehreren Bohrungen versehen und jeweils mittels federnd abgestützten Befestigungsschrauben an einem benachbarten Karosserieteil befestigt. In Berücksichtigung einer thermischen Ausdehnung des Kotflügels weisen die Bohrungen einen größeren Innendurchmesser als der Außendurchmesser des Schraubenbolzens auf.

Eine zweckmäßige Ausgestaltung der Erfindung sieht vor, dass ein oder mehrere Verbindungselemente mit ein- oder beidseitig angeordneten Versteifungselementen in Form von Versteifungsrippen versehen sind, wobei die zur Innenkontur des Kotflügels weisenden Versteifungsrippen gleichzeitig Abstandsrippen für einen gleichmäßigen Kleberauftrag sein können.

Weiterhin wird als erfindungsgemäß angesehen, dass wenigstens im Bereich eines nach innen abgeknickten Radausschnittes des Kotflügels im Knick und auf der Innenseite desselben zur Versteifung und verbesserten Anbindung einer Radhausschale ein oder mehrere Versteifungselemente in Form von parallel zum Radausschnitt angeordneten Rippen angeordnet sind. Wie die Erfindung weiter vorsieht, ist wenigstens eine im oberen Bereich des Kotflügels ausgebildete und sich auf einem benachbarten Karosserieteil abstützende Kotflügelbank innenseitig mit einer Mehrzahl von Versteifungselementen in Form von Versteifungsrippen versehen.

Wie die Erfindung noch vorsieht, ist auf die Innenkontur des Kotflügels eine gegebenenfalls mehrgeteilte, Einlegematte aufgeklebt, welche eine Kunststofffolie sein kann.

Wie die Erfindung schließlich noch vorsieht, weist der Kotflügel einen Zierleistenbereich auf, der seinerseits durch ein oder mehrere Auflageflächen für die Zierleiste mit ein oder mehreren Positionierungs- , respektive Aufnahmebohrungen, in die Aufnahmestifte der Zierleiste eingreifen, beinhaltet, wobei auf der Innenkontur des Kotflügels im Zierleistenbereich ein oder mehrere Versteifungselemente in Form von Versteifungsrippen aufgebracht sind.

Schlußendlich wird als erfindungsgemäß angesehen, dass die Grundstruktur des Kotflügels aus einem PUR-RIM-System besteht und dass der verwendete Klebstoff ein PUR-Strukturklebstoff ist.

Nachfolgend wird die Erfindung anhand eines bevorzugten und in den Zeichnungen schematisch dargestellten Ausführungsbeispieles näher erläutert. Es zeigen:
- Figur 1: die Außenansicht eines erfindungsgemäß ausgestalteten Kotflügels,
- Figur 2: die Innenansicht des Kotflügels nach Fig. 1,
- Figur 3: die perspektivische Ansicht eines stoßfängerseitigen Verbindungselements (klebeflächenseitig),
- Figur 4: das stoßfängerseitige Verbindungselement nach Fig. 3 (karosserieseitig),
- Figur 5: den Schnitt I-I nach Fig. 2,
- Figur 6: die perspektivische Ansicht eines fahrzeugtürseitigen Verbindungselements (klebeflächenseitig),
- Figur 7: das fahrzeugtürseitige Verbindungselement nach Fig. 6 (karosserieseitig),
- Figur 8: den Schnitt II-II nach Fig. 2,
- Figur 9: die perspektivische Ansicht des fahrzeugtürseitigen Verbindungsbereiches des Kotflügels (karosserieseitig) mit eingebautem fahrzeugtürseitigem Verbindungselement,
- Figur 10: die perspektivische Ansicht des fahrzeugtürseitigen Verbindungsbereiches samt Klemmelement (klebeflächenseitig),
- Figur 11: ein fahrzeugtürseitiges Verbindungselement nach Fig. 7 mit angebautem Führungselement,
- Figur 12: die perspektivische Innenansicht eines Ausschnittes des Kotflügels im Bereich des Radausschnittes,
- Figur 13: die perspektivische Innenansicht eines Ausschnittes des Kotflügels im Bereich einer Kotflügelbank,
- Figur 14: die perspektivische Außenansicht eines Ausschnittes des Kotflügels in einem Zierleistenbereich,
- Figur 15: die Innenansicht nach Fig. 14,
- Figur 16: die schematische Darstellung einer geeigneten Schraubverbindung für Kotflügel aus Kunststoff mit metallenen Karosseriebauteilen,
- Figur 17: die Innenansicht des Kotflügels nach Fig. 1 in einer weiteren vorteilhaften Ausgestaltung.

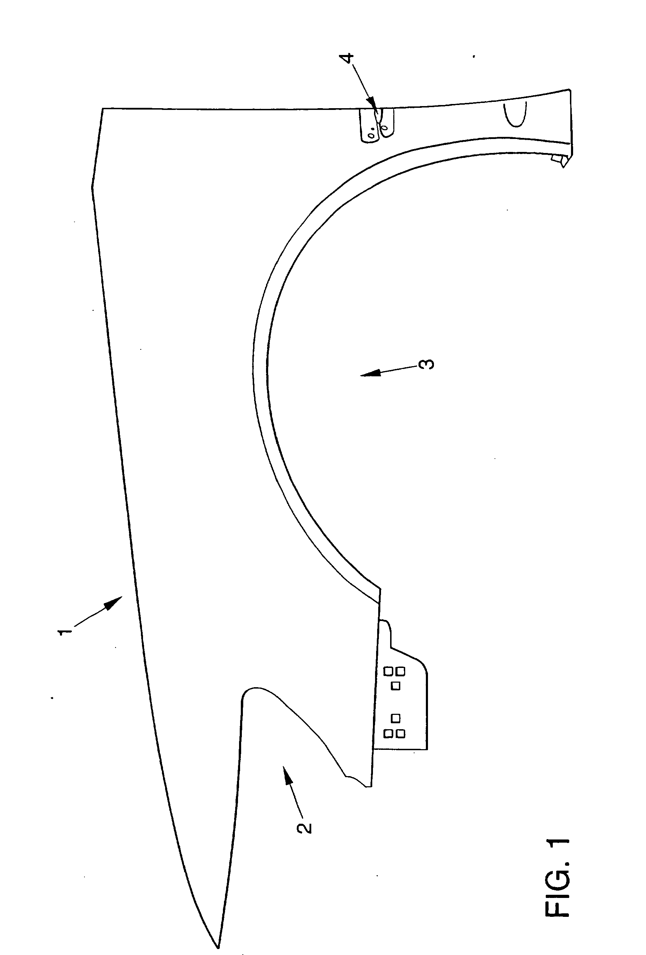

Fig. 1 zeigt die Außenansicht eines vorderen linken Kotflügels 1, wobei linksseitig der Ausschnitt 2 für einen Scheinwerfer und unten der Radausschnitt 3 ersichtlich sind. Im rechten Anschlußbereich, beispielsweise an die A-Säule einer nicht näher dargestellten Fahrgastzelle, ist ein Zierleistenbereich 4 angeordnet, bis zu welchem sich eine annähernd horizontal auf der Außenhaut befestigte an sich bekannte und demgemäß nicht näher dargestellte Zierleiste erstreckt.

Der Kotflügel 1 ist im wesentlichen aus Kunststoff gefertigt, wobei das an sich bekannte Hinterspritzverfahren Verwendung finden kann.

Als besonders geeignet hat sich eine Grundstruktur des Kotflügels 1 aus einem sogenannten PUR-RIM-System erwiesen. Als PUR-RIM-Systeme werden solche Gruppen von Polyuretanen bezeichnet, aus denen weitestgehend kompakte, hartelastische, im wesentlichen dünnwandige und oft mit Glasfasern verstärkte Formteile, wie es Karosserieaußenhautbauteile und somit auch Kotflügel 1 sind, hergestellt werden. Mit solchen Systemen sind sehr kurze Reaktionszeiten einstellbar, welches sich besonders für Großserien anbietet und wo beispielsweise Thermoplaste gegen PUR ausgetauscht werden sollen. Fernerhin erfüllen PUR-RIM-Systeme die immer anspruchsvolleren Vorgaben an hoher Form- und Wärmestabilität. Gleichfalls sind diese Systeme besonders geeignet, nach dem sogenannten KTL-Verfahren (Kathodische Tauchlackierung) behandelt zu werden, woraus wiederum ein glatter, feiner Lackverlauf resultiert.

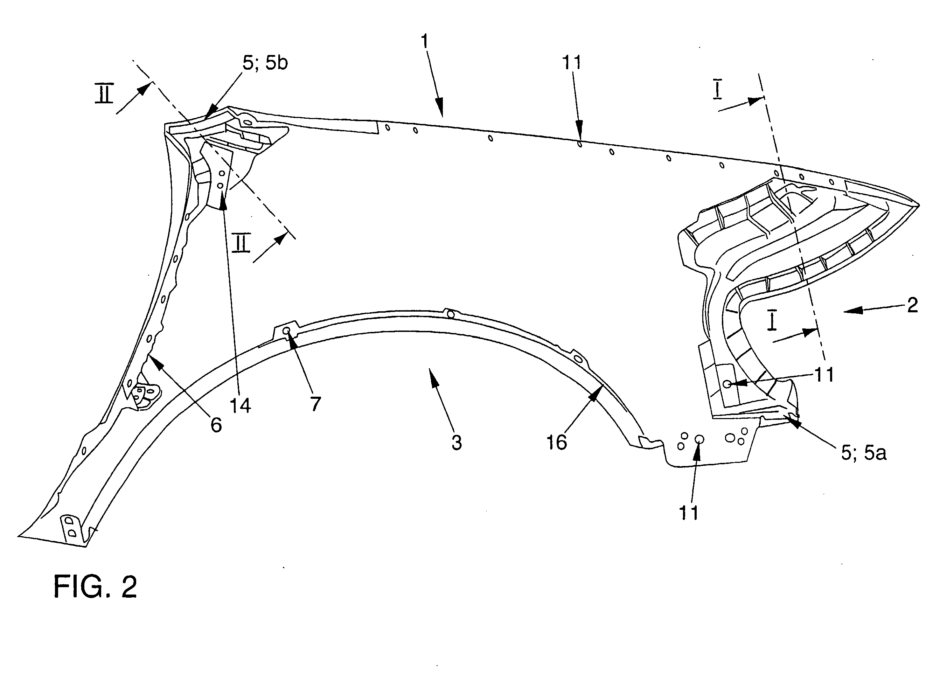

Fig. 2 zeigt die Innenansicht des vorstehend beschriebenen Kotflügels 1 mit einer Vielzahl von Befestigungspunkten zur Befestigung des Kotflügels 1 an die hier nicht näher dargestellte metallene Kraftfahrzeugkarosserie.

Den Befestigungspunkten sind Verbindungs-, Führungs- und/oder Versteifungselemente 5, 6, 7 aus Kunststoff oder Metall zugeordnet und können sowohl Guß- als auch Preßteile sein. Als Metallguß bietet sich beispielsweise Leichtmetallguß an. Was den Kunststoff anbelangt, eignen sich hier ebenfalls PUR-RIM-Systeme, jedoch werden durch die Erfindung jedwede anderen an sich bekannten und geeigneten Kunststoffe mit erfaßt.

In einer ersten Ausführungsvariante werden solche Verbindungs-, Führungs- und/oder Versteifungselemente 5, 6, 7 vorgefertigt und als gesonderte Bauteile in den prädestinierten Bereichen auf die Innenseite der ebenfalls vorgefertigten Schale des Kotflügels 1 aufgeklebt.

Gleichfalls besteht die Möglichkeit, und an sich bekannte Herstellungsverfahren, wie das Hinterspritzverfahren, erlauben dies, die Verbindungs-, Führungs- und/oder Versteifungselemente 5, 6, 7 auf die Innenkontur des Kotflügels 1 aufzuarbeiten, respektive aufzuspritzen, so dass ein kompaktes einstückiges Bauteil ausgebildet wird, welches aus der Schale des Kotflügels samt Verbindungs-, Führungs- und/oder Versteifungselementen 5, 6, 7 besteht.

Die bevorzugte Ausführungsform stellt eine Kombination beider vorstehender Ausführungsformen dar. Danach werden erfindungsgemäß je ein stoßfängerseitiges Verbindungselement 5a und ein fahrzeugtürseitiges Verbindungselement 5b vorgefertigt und mittels eines Klebstoffes 8 in die Randzonen der Innenkontur des Kotflügels 1 geklebt (Fig. 2) und zwar derart, dass keine Abzeichnungen auf der Außenhaut des Kotflügels 1 sichtbar sind.

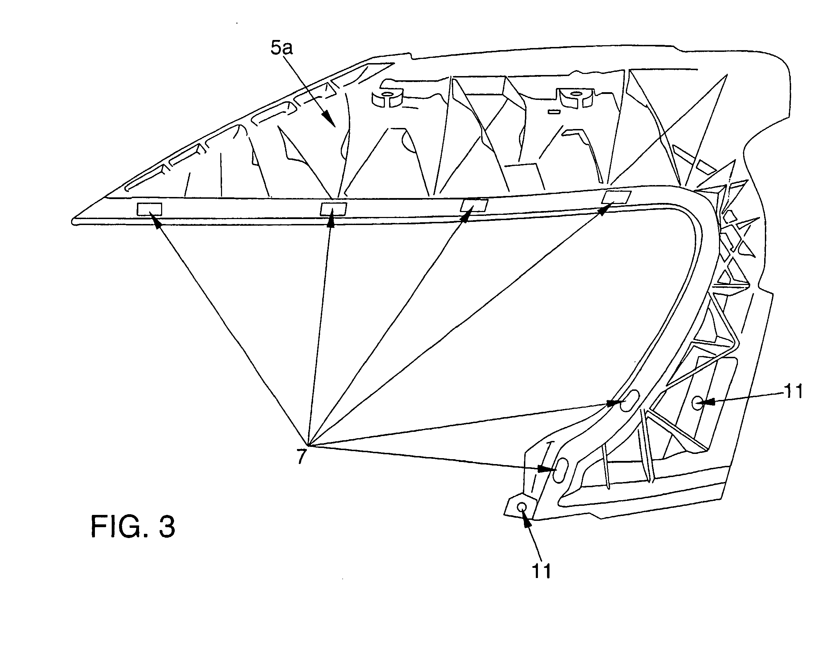

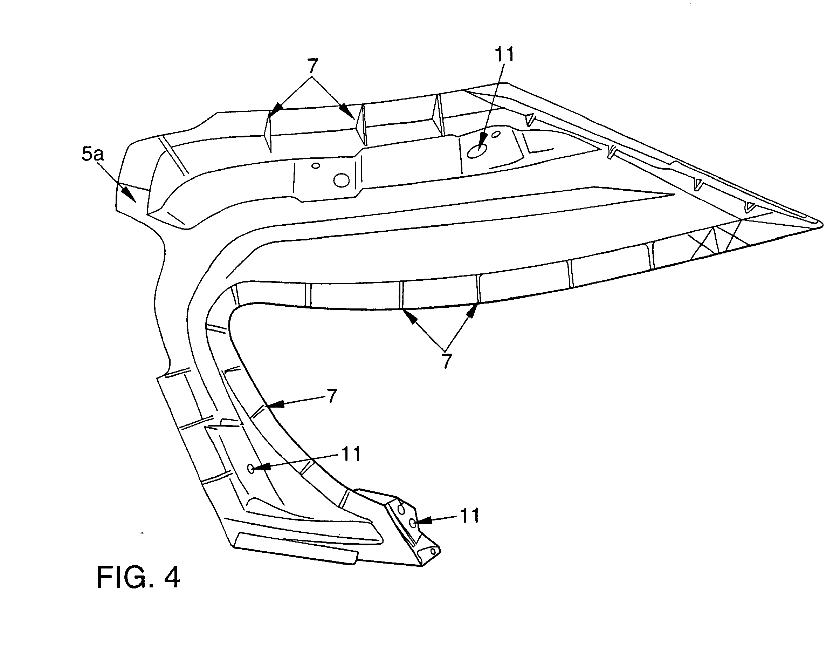

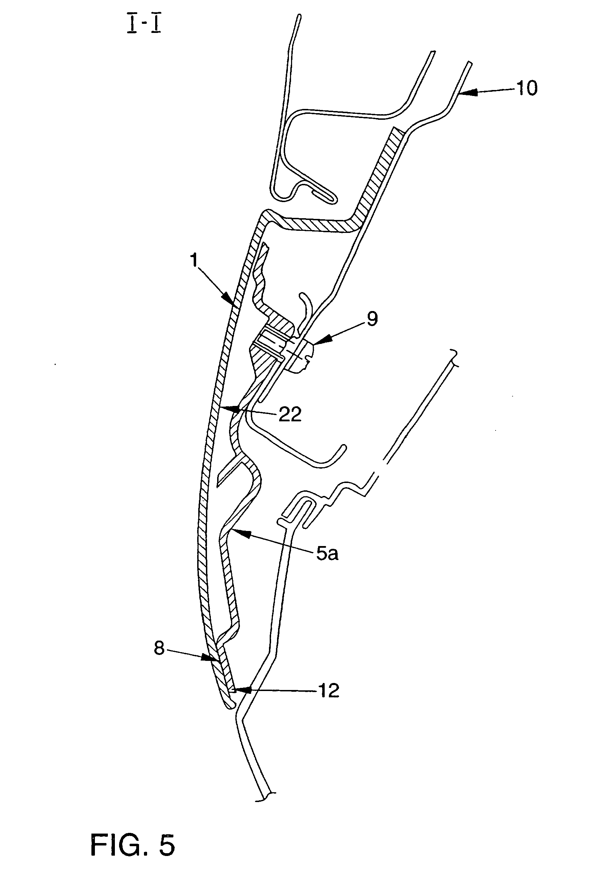

Fig. 3 und 4 zeigen das stoßfängerseitige Verbindungselement 5a, welches mit einer Mehrzahl von Versteifungselementen 7 in Form von Versteifungsrippen versehen ist. Die Versteifungsrippen können ein- oder beidseitig, vorliegend beidseitig vorgesehen werden, wobei die zur Innenkontur des Kotflügels 1 weisenden Versteifungsrippen gleichzeitig Abstandsrippen für einen gleichmäßigen Auftrag des Klebstoffes 8 sind. Des Weiteren ist das stoßfängerseitige Verbindungselement 5a zur formschlüssigen Anbindung mittels Befestigungsschrauben 9 an ein benachbartes Karosserieteil 10 und an einen nicht näher dargestellten Stoßfänger mit Bohrungen 11 versehen (Fig. 5).

Wie bereits oben ausgeführt, werden je nach gewünschter Ausführung Verbindungs-, Führungs- und/oder Versteifungselemente 5, 6, 7 auf die Innenkontur des Kotflügels 1 aufgeklebt. Dieses kann sowohl vollflächig als auch nur bereichsweise erfolgen.

Fig. 5 zeigt eine bevorzugte Ausführungsform derart, dass das stoßfängerseitige Verbindungselement 5a eine hohlförmige Gestalt aufweist und lediglich in seinen Randbereichen mit dem Kotflügel 1 verbunden ist. Mittels sogenannter Anschlagnasen 12 wird zwischen den eigentlichen Klebeflächen ein solcher Abstand gewahrt, der für die Benetzung mit dem gewählten Klebstoff 8 erforderlich ist. Als Klebstoff 8 hat sich ein PUR-Strukturklebstoff besonders bewährt. Durch die hohlförmige Gestalt des stoßfängerseitigen Verbindungselements 5a während des eigentlichen Klebevorganges ist ein Ausweichen übermäßigen Klebstoffes 8 nach außen gewährleistet.

Wie insbesondere die Fig. 5 weiter zeigt, verfügt das Verbindungselement 5a über eine gerippte Struktur. Durch diese Maßnahme in der Zusammenschau mit der hohlförmigen Gestalt wird eine besonders hohe Eigensteifigkeit des stoßfängerseitigen Verbindungselements 5a erzielt. Die stoßfängerseitigen Verbindungselemente 5a können auch nicht näher dargestellte und zur Karosserie hin weisende Vorsprünge aufweisen, die zum einen als Abstandshalter fungieren oder auch mittels beispielsweise Schraub- oder Klemmverbindungen die Verbindung zum benachbarten Karosserieteil 11 herstellen können.

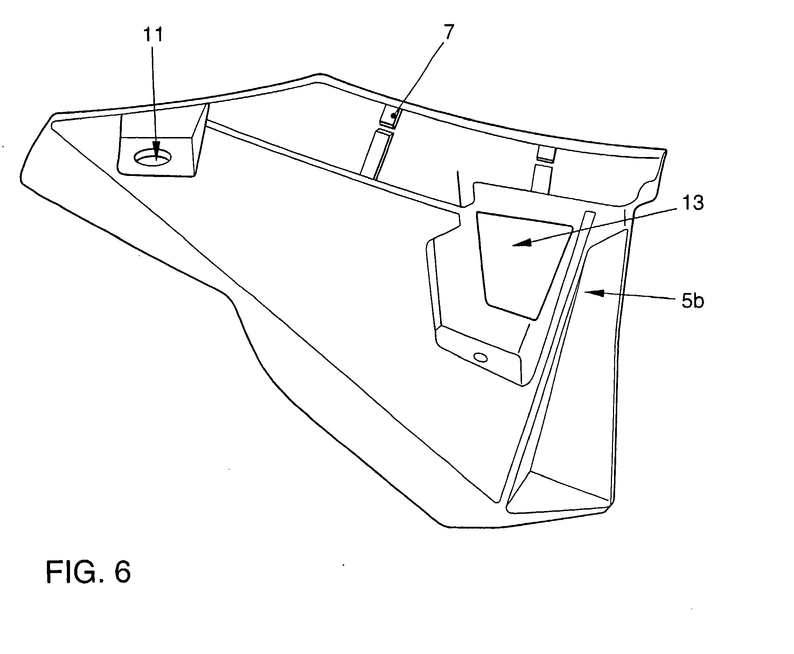

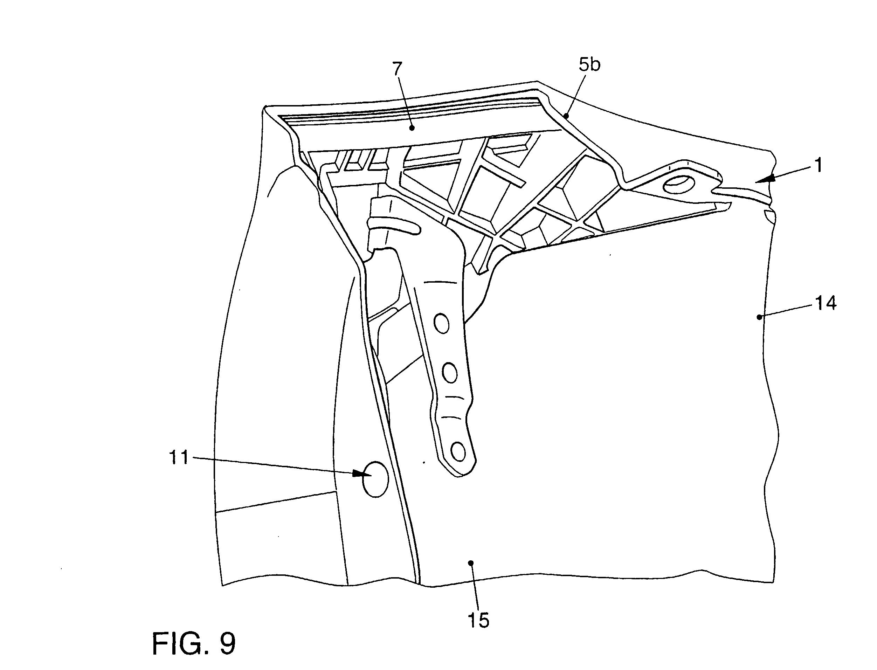

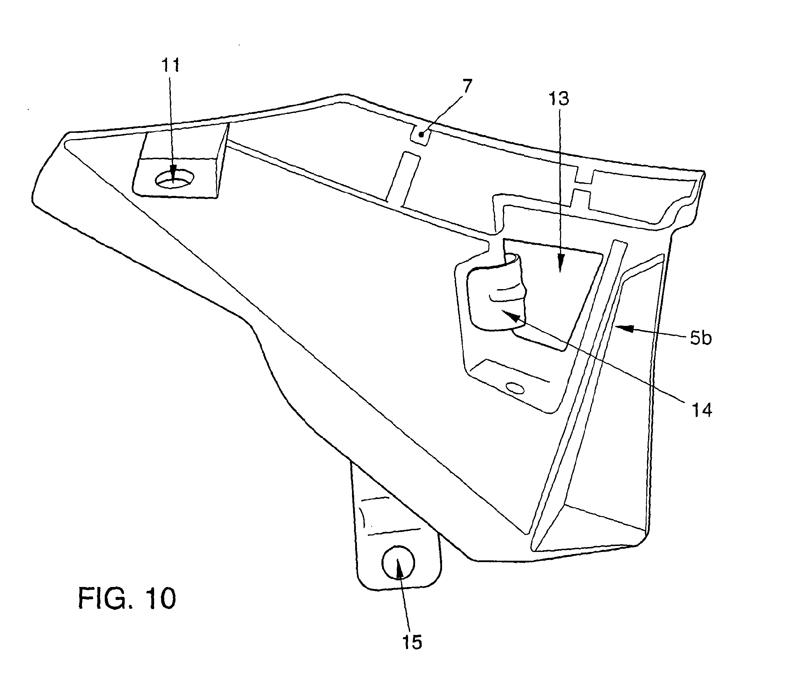

Die Fig. 6 bis 10 zeigen im wesentlichen das fahrzeugtürseitige Verbindungselement 5b, welches seinerseits die Verbindung des Kotflügels 1 mit der Fahrzeugkarosserie im Bereich der nicht näher dargestellten Fahrgastzelle herstellt.

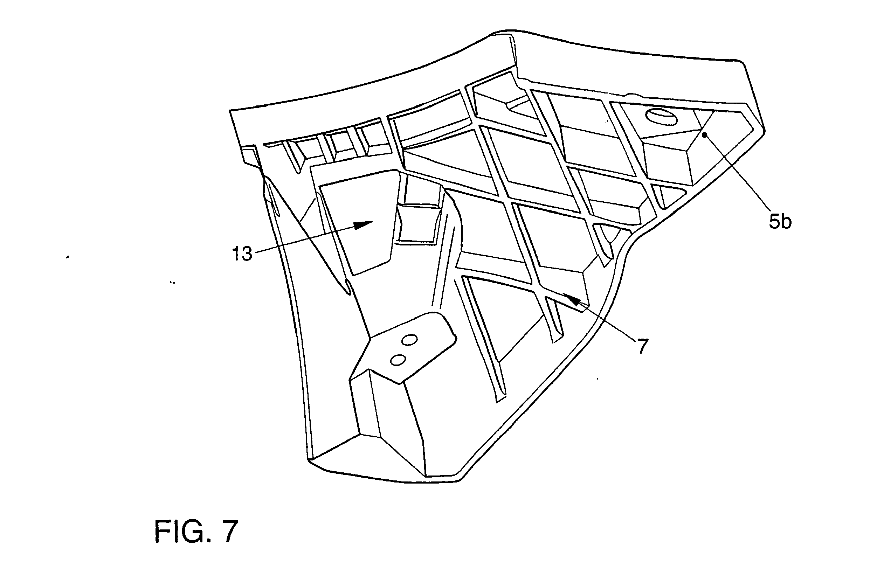

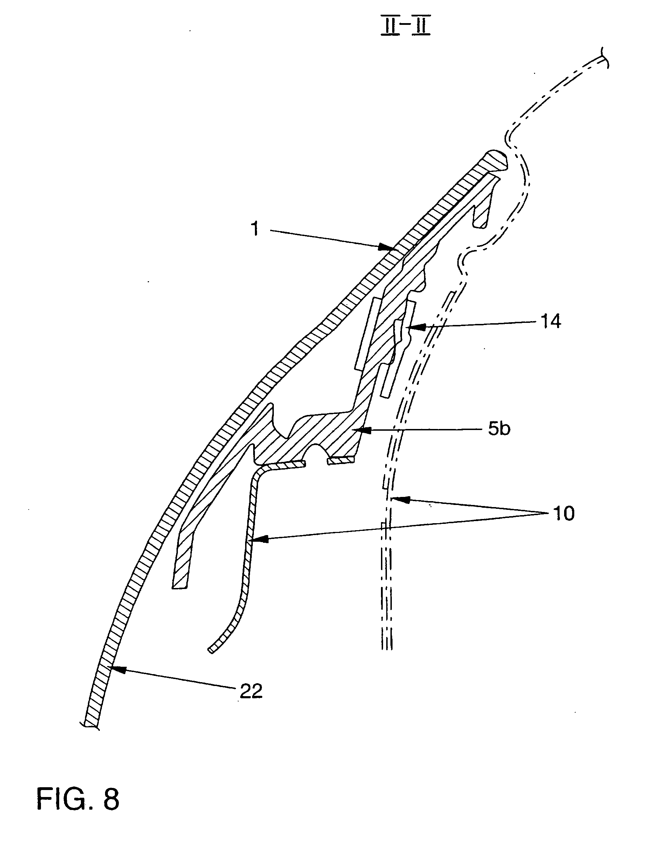

Die Grundstruktur des fahrzeugtürseitigen Verbindungselementes 5b entspricht in etwa der des vorbeschriebenen stoßfängerseitigen Verbindungselementes 5a. Auch hier sind eine Mehrzahl von Versteifungselementen 7 in Form von Versteifungsrippen angeordnet (Fig. 7). Im Unterschied zum stoßfängerseitigen Verbindungselement 5a weist das fahrzeugtürseitige Verbindungselement 5b eine Aufnahme 13 für ein Verhakungselement 14 auf, welches einerends in die Aufnahme 13 lösbar eingreift und andererends formschlüssig durch Bohrungen 15 hindurch, beispielsweise mittels Befestigungsschrauben an der verlängerten A-Säule der Fahrgastzelle (nicht näher dargestellt) befestigt ist. Sowohl das fahrzeugtürseitige Verbindungselement 5b, respektive deren Aufnahme 13 als auch der korrespondierende Teil des Verhakungselementes 14 weisen eine solche Kontur auf, dass dieselben ein gegebenenfalls lösbares Klemmelement ausbilden (Fig. 8).

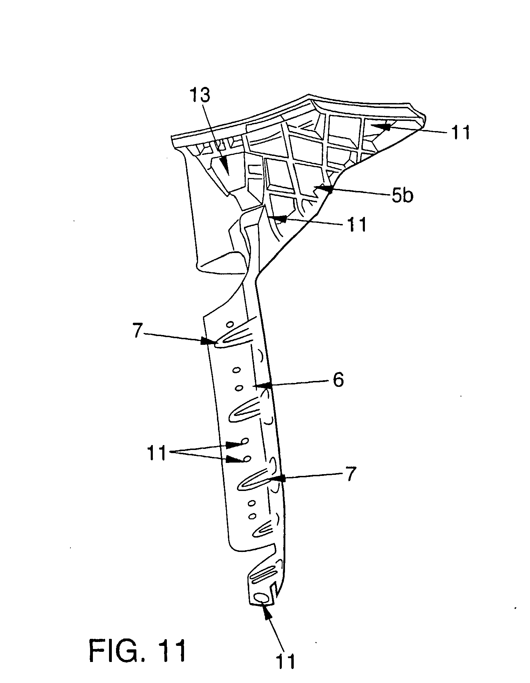

In den Fig. 2 und 11 ist das oben bereits erwähnte Führungselement 6 gezeigt, welches zum einen gemäß vorliegendem Ausführungsbeispiel formschlüssig am fahrzeugtürseitigen Verbindungselement 5b und zum anderen, sich im Randbereich des Kotflügels 1 nach unten erstreckend, an der Innenkontur desselben befestigt ist, vorzugsweise, wie oben ausführlich dargelegt, verklebt ist. Auch dieses verfügt über Versteifungselemente 7 in Form von Versteifungsrippen. Durch dieses Führungselement 6 verfügt der Kotflügel 1 fahrzeugtürseitig über eine stabile Einbaulage, wodurch wiederum eine gleichmäßige Fuge zwischen Kotflügel 1 und Fahrzeugtür erzielbar ist (nicht näher dargestellt).

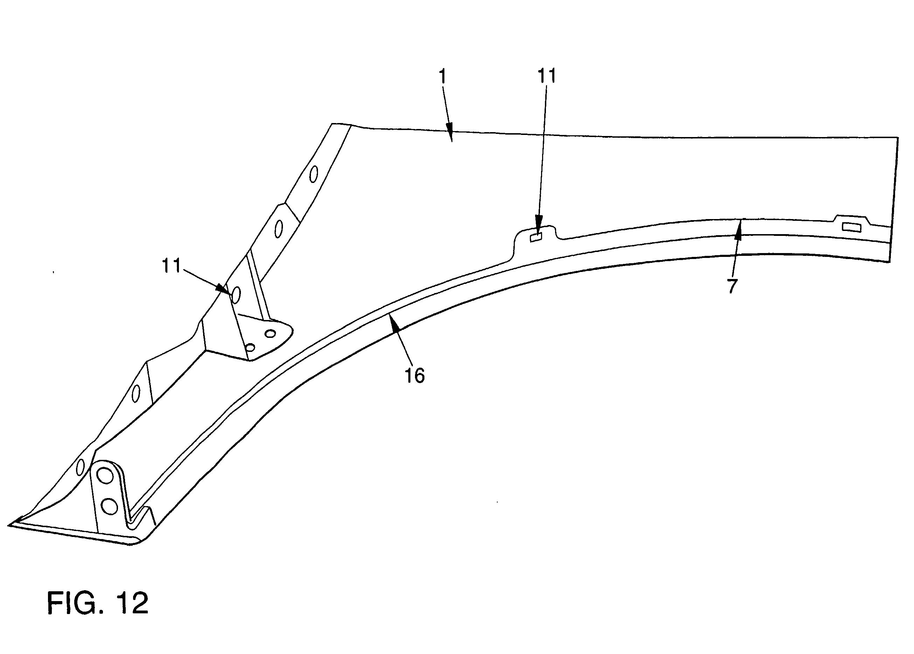

Gemäß Fig. 12 sind ferner wenigstens im Bereich des vorliegend nach innen abgeknickten Radausschnittes 3 des Kotflügels 1 im Knick 16 und auf der Innenseite desselben zur Versteifung und verbesserten Anbindung einer nicht näher dargestellten an sich bekannten Radhausschale ein oder mehrere Versteifungselemente 7, vorliegend ein Versteifungselement 7 in Form einer parallel zum Radausschnitt 3 angeordneten Rippe, angeordnet. Diese kann, wie bereits oben dargetan, als gesondertes Bauteil aufgeklebt oder während der Fertigung der Schale des Kotflügels 1 bereits aufgespritzt sein. Durch diese besondere Platzierung werden Abzeichnungen auf der Außenseite des Kotflügels 1 vermieden.

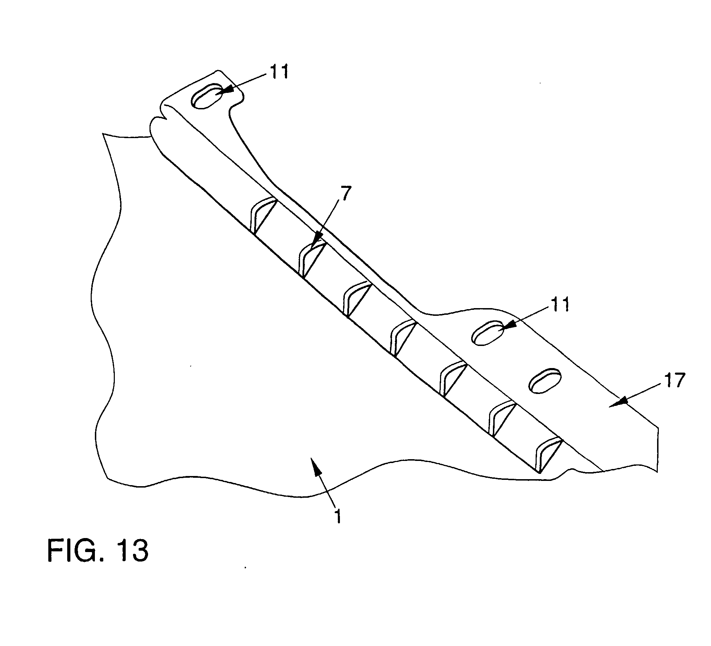

Ebenso verhält es sich mit der an sich bekannten und oben angeordneten Kotflügelbank 17, die sich ihrerseits auf einem benachbarten langgestreckten Karosserieteil 10, welches ein verlängerter Längsträger sein kann, abstützt. In den Fig. 11 und 13 ist die besagte Kotflügelbank 17 des Kotflügels 1 näher gezeigt. Innenseitig ist diese mit einer Mehrzahl von Versteifungselementen 7 in Form von Versteifungsrippen versehen, die in der bevorzugten Ausführungsform des Kotflügels 1 bereits während der Herstellung desselben aufgespritzt wurden.

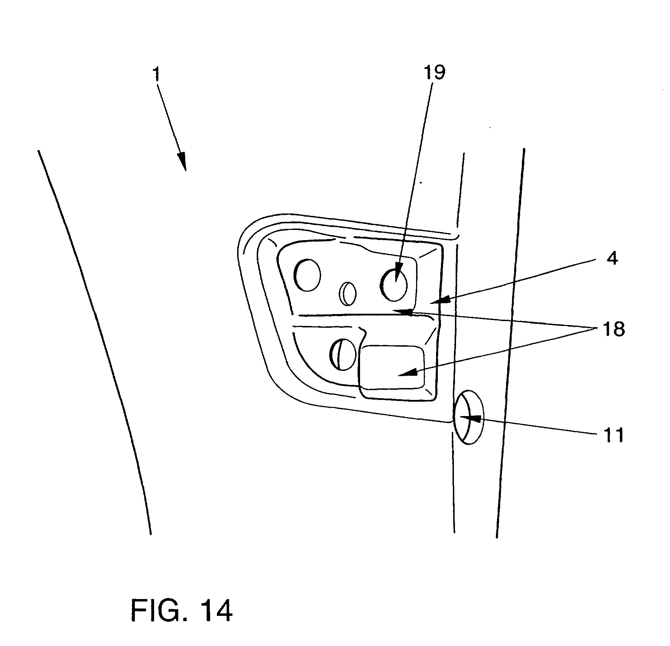

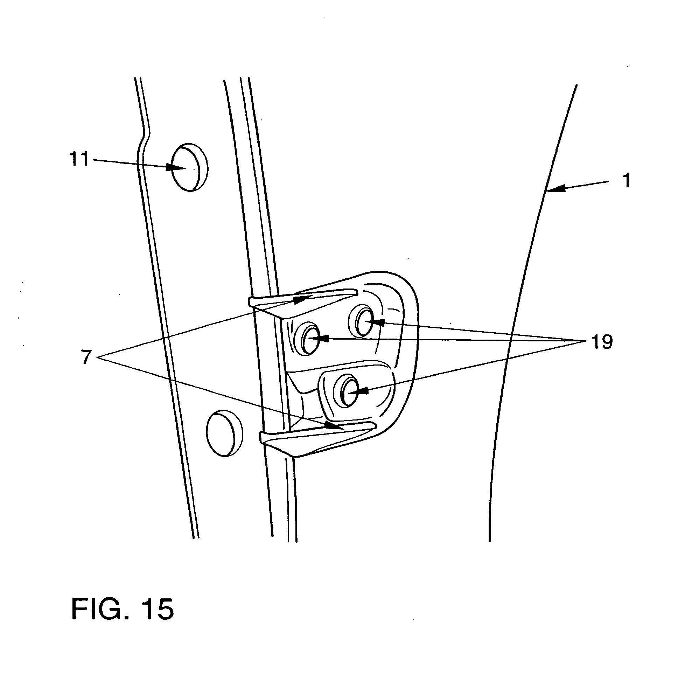

Den Fig. 14 und 15 ist der Zierleistenbereich 4 zu entnehmen, in dem eine nicht näher dargestellte Zierleiste endseitig fixiert und befestigt ist. Dieser ist durch ein oder mehrerer, vorliegend drei Auflageflächen 18 sowie ein oder mehrere, vorliegend vier Positionierungs-, respektive Aufnahmebohrungen 19, in welche nicht näher dargestellte Aufnahmestifte der Zierleiste eingreifen, gekennzeichnet. Auf der Innenkontur des Kotflügels 1 im Bereich dieses Zierleistenbereiches 4 sind erfindungsgemäß ebenfalls Versteifungselemente 7 in Form von Versteifungsrippen aufgebracht, vorzugsweise aufgespritzt.

Sämtliche vorstehenden Maßnahmen stellen im wesentlichen steifigkeitserhöhende Maßnahmen dar, die einhergehen, mit einer einfachen und kostengünstigen Montage des Kotflügels 1.

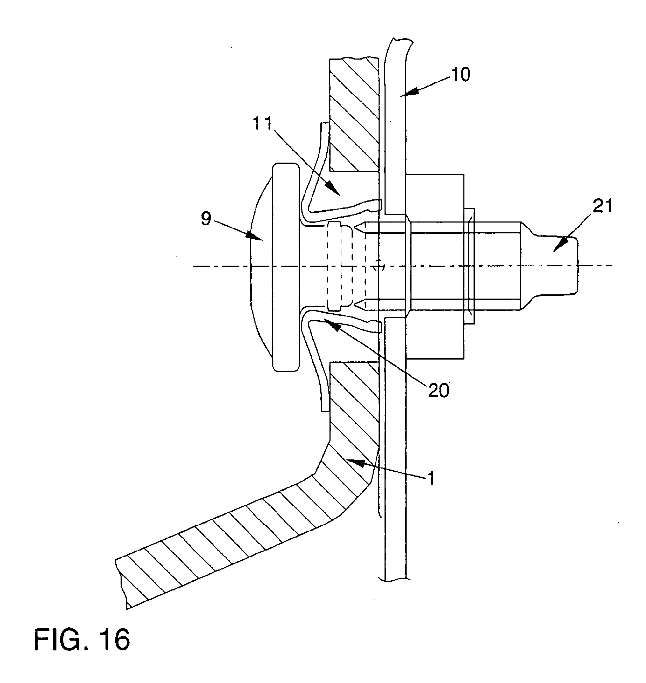

Vergleicht man vorliegenden erfindungsgemäß ausgestalteten Kotflügel 1 aus Kunststoff mit herkömmlichen aus Stahlblech, so ist eine erhebliche Verringerung von Folgeverbundwerkzeugen zu verzeichnen. Bei Blechkotflügeln müssen pro Fahrzeugseite wenigstens sechs Folgeverbundwerkzeuge vorgesehen werden. Kotflügel aus Kunststoff benötigen dagegen pro Fahrzeugseite nur noch ein solches Werkzeug.
Was die aufgabengemäße Gewährleistung einer eventuell noch vorhandenen thermischen Ausdehnung des Kotflügels 1 im Verhältnis zur metallenen Unterkonstruktion anbelangt, ist ein Großteil der Schraubverbindungen, sei es die direkte Verbindung der Schale des Kotflügels 1 mit einem benachbarten Karosserieteil 10, beispielsweise im Bereich der Kotflügelbank 17, oder eine Schraubverbindung zwischen einem Verbindungselement 5 und einem benachbarten Karosserieteil 10, erfindungsgemäß derart gestaltet, dass die Befestigungsschrauben 9 sich mittels einer aufgefädelten Federscheibe 20 abstützen und die Bohrungen 11 einen größeren Innendurchmesser als der Außendurchmesser des Schraubenbolzens 21 aufweisen. Durch diese Maßnahme ist eine begrenzte Bewegung des Kotflügels 1 in radialer Richtung der Bohrungen 11 gegeben, ohne den Festsitz des Kotflügels 1 zu beeinträchtigen (Fig. 16).

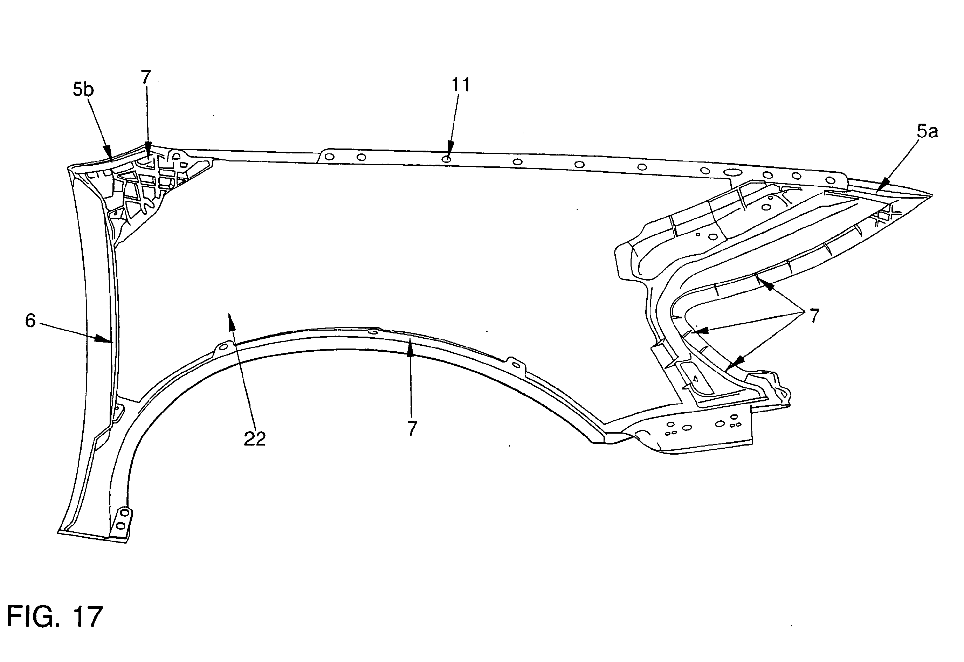

Bezüglich der gewünschten sicherheitstechnischen Maßnahmen ist gemäß Fig. 17 auf der Innenseite des Kotflügels 1, d. h., auf dem freien Flächenbereich desselben, sei es zwischen den Verbindungs- und sonstigen Elementen als auch unterhalb der Verbindungselemente 5, eine Einlegematte 22 aufgebracht, vorzugsweise aufgeklebt. Diese kann ein- oder mehrteilig ausgeführt und beispielsweise eine selbstklebende Kunststofffolie sein (Fig. 5, 8, 17). Mit dieser Maßnahme wird im Falle eines Crashes vorteilhaft ein weiträumiges Verstreuen von Splittern des zerstörten Kotflügels 1 verhindert, da diese infolge der Einlegematte 22 am Kraftfahrzeug verbleiben.

Die in Rede stehende Erfindung wurde vorstehend ausführlich anhand eines vorderen Kotflügels 1 beschrieben. Durch die Erfindung werden jedoch sämtliche Kotflügel aus Kunststoff an einem Kraftfahrzeug mit erfaßt, die mittels der beschriebenen erfindungsgemäßen Maßnahmen an metallenen Unterkonstruktionen befestigt werden können.

## Patentansprüche

1. Anordnung eines Kotflügels aus Kunststoff und seiner Befestigungsmittel an Kraftfahrzeugen, wobei sich der Kotflügel (1) mittels mechanischer Befestigungsmittel an der Kraftfahrzeugkarosserie abstützt und an dieser befestigt ist, und dem Kotflügel (1) im Bereich einer Mehrzahl von Befestigungspunkten Verbindungs-, Führungs- und/oder Versteifungselemente (5, 6, 7) zugeordnet sind, die ihrerseits als gesonderte und vorgefertigte Bauteile auf die Innenkontur des Kotflügels (1) aufgeklebt oder auf die Innenkontur des Kotflügels (1) aufgearbeitet, respektive aufgespritzt sind, **dadurch gekennzeichnet, dass** der Kotflügel (1) wenigstens ein stoßfängerseitiges und ein fahrzeugtürseitiges Verbindungselement (5a, 5b) aufweist, das stoßfängerseitige Verbindungselement (5a) in die Randzone des Kotflügels (1) eingebracht und zur formschlüssigen Anbindung mittels Befestigungsschrauben (9) an ein benachbartes Karosserieteil (10) und an den Stoßfänger ausgebildet ist, das fahrzeugtürseitige Verbindungselement (5b) ebenfalls in die Randzone des Kotflügels (1) eingebracht ist sowie zur Ausbildung eines Klemmelementes eine Aufnahme (13) für ein in dasselbe eingreifendes Verhakungselement (14) aufweist, welches fest an einem benachbarten Karosserieteil (10) angeordnet ist, und dem Kotflügel (1) fahrzeugtürseitig wenigstens ein Führungselement (6) für eine stabile Einbaulage am Fahrzeug und zur Realisierung einer gleichmäßigen Fuge zur Fahrzeugtür zugeordnet ist.

2. Anordnung nach Anspruch 1,
**dadurch gekennzeichnet, dass**
die Verbindungs-, Führungs- und/oder Versteifungselemente (5, 6, 7) aus Kunststoff und/oder Metall ausgebildet sind.

3. Anordnung nach Anspruch 1 oder 2,
**dadurch gekennzeichnet, dass**
die Verbindungs-, Führungs- und/oder Versteifungselemente (5, 6, 7) vollflächig oder teilbereichsweise auf die Innenkontur des Kotflügels (1) aufgeklebt sind.

4. Anordnung nach einem der Ansprüche 1 bis 3,
**dadurch gekennzeichnet, dass**
die Verbindung-, Führungs- und/oder Versteifungselemente (5, 6, 7) derart auf die Innenkontur des Kotflügels (1) aufgeklebt sind, dass keine Abzeichnungen auf der Außenhaut des Kotflügels (1) sichtbar sind.

5. Anordnung nach einem der Ansprüche 1 bis 4,
**dadurch gekennzeichnet, dass**
der Kotflügel (1) und/oder ein oder mehrere Verbindungselemente (5) mit einer oder mehreren Bohrungen (11) versehen und jeweils mittels federnd abgestützten Befestigungsschrauben (9) an einem benachbarten Karosserieteil (10) befestigt sind.

6. Anordnung nach Anspruch 5,
**dadurch gekennzeichnet, dass**
in Berücksichtigung einer thermischen Ausdehnung des Kotflügels (1) die Bohrungen (11) einen größeren Innendurchmesser als der Außendurchmesser des Schraubenbolzens (19) aufweisen.

7. Anordnung nach einem der Ansprüche 1 bis 6,
**dadurch gekennzeichnet, dass**
ein oder mehrere Verbindungselemente (5) mit ein- oder beidseitig angeordneten Versteifungselementen (7) in Form von Versteifungsrippen versehen sind, wobei die zur Innenkontur des Kotflügels (1) weisenden Versteifungsrippen gleichzeitig Abstandsrippen für einen gleichmäßigen Kleberauftrag sind.

8. Anordnung nach einem der Ansprüche 1 bis 7,
**dadurch gekennzeichnet, dass**
wenigstens im Bereich eines nach innen abgeknickten Radausschnittes (3) des Kotflügels (1) im Knick (16) und auf der Innenseite desselben zur Versteifung und verbesserten Anbindung einer Radhausschale ein oder mehrere Versteifungselemente (7) in Form von parallel zum Radauschnitt (3) angeordneten Rippen angeordnet sind.

9. Anordnung nach einem der Ansprüche 1 bis 8,
**dadurch gekennzeichnet, dass**
wenigstens eine im oberen Bereich des Kotflügels (1) ausgebildete und sich auf einem benachbarten Karosserieteil (10) abstützende Kotflügelbank (17) innenseitig mit einer Mehrzahl von Versteifungselementen (7) in Form von Versteifungsrippen versehen ist.

10. Anordnung nach einem der Ansprüche 1 bis 9,
**dadurch gekennzeichnet, dass**
auf die Innenkontur des Kotflügels (1) eine, gegebenenfalls mehrgeteilte Einlegematte (22) aufgeklebt ist.

11. Anordnung nach Anspruch 10,
**dadurch gekennzeichnet, dass**
die Einlegematte (22) eine Kunststofffolie ist.

12. Anordnung nach einem der Ansprüche 1 bis 11,
**dadurch gekennzeichnet, dass**
der Kotflügel (1) einen Zierleistenbereich (4) aufweist, der seinerseits durch ein oder mehrere Auflageflächen für die Zierleiste mit ein oder mehreren Positionierungs- , respektive Aufnahmebohrungen (19), in die Aufnahmestifte der Zierleiste eingreifen, beinhaltet, wobei auf der Innenkontur des Kotflügels (1) im Zierleistenbereich (4) ein oder mehrere Versteifungselemente (7) in Form von Versteifungsrippen aufgebracht sind.

13. Anordnung nach einem der Ansprüche 1 bis 12,
**dadurch gekennzeichnet, dass**
die Grundstruktur des Kotflügels (1) aus einem PUR-RIM-System besteht.

14. Anordnung nach einem der Ansprüche 1 bis 13,
**dadurch gekennzeichnet, dass**
der verwendete Klebstoff ein PUR-Strukturklebstoff ist.

## Claims

1. Arrangement of a plastic wing and its fasteners on motor vehicles, the wing (1) being braced by means of mechanical fasteners against the motor vehicle body and fixed to the latter, and connecting, guide and/or stiffening elements (5, 6, 7) assigned to the wing (1) in the area of multiple fixing points being in turn bonded as separate, prefabricated components onto the inside contour of the wing (1) or worked or moulded onto the inside contour of the wing (1), **characterized in that** the wing (1) has at least one bumper-side and one vehicle door-side connecting element (5a, 5b), the bumper-side connecting element (5a) being inserted into the edge zone of the wing (1) and being designed for positively interlocking attachment to an adjacent body part (10) and to the bumper by means of fixing bolts (9), and the vehicle door-side connecting element (5b) likewise being inserted into the edge zone of the wing (1) and having a socket (13) for a catch element (14) engaging therein so as to form a locking element, said catch element being fixedly arranged on an adjacent body part (10), and at least one guide element (6) being assigned to the wing (1) on the vehicle door side for a stable fitting position on the vehicle and to provide a uniform joint to the vehicle door.

2. Arrangement according to Claim 1, **characterized in that** the connecting, guide and/or stiffening elements (5, 6, 7) are formed from plastic and/or metal.

3. Arrangement according to Claim 1 or 2, **characterized in that** the connecting, guide and/or stiffening elements (5, 6, 7) are bonded onto the inside contour of the wing (1) over the entire surface or in partial areas thereof.

4. Arrangement according to any one of Claims 1 to 3, **characterized in that** the connecting, guide and/or stiffening elements (5, 6, 7) are bonded onto the inside contour of the wing (1) in such a way that there are no visible signs on the outer skin of the wing (1).

5. Arrangement according to any one of Claims 1 to 4, **characterized in that** the wing (1) and/or one or more connecting elements (5) are provided with one or more holes (11) and are in each case fixed to an adjacent body part (10) by means of resiliently braced fixing bolts (9).

6. Arrangement according to Claim 5, **characterized in that** the holes (11) have an inside diameter greater than the outside diameter of the bolt (19), in order to allow for thermal expansion of the wing (1).

7. Arrangement according to any one of Claims 1 to 6, **characterized in that** one or more connecting elements (5) are provided on one or both sides with stiffening elements (7) in the form of stiffening ribs, the stiffening ribs facing the inside contour of the wing (1) at the same time being spacer ribs for a uniform application of adhesive.

8. Arrangement according to any one of Claims 1 to 7, **characterized in that**, at least in the area of a bent wheel opening (3) of the wing (1), one or more stiffening elements (7), in the form of ribs arranged parallel to the wheel opening (3), are arranged in the bend (16) and on the inside thereof for reinforcement and improved attachment of the wheel house shell.

9. Arrangement according to any one of Claims 1 to 8, **characterized in that** at least one wing bench (17) formed in the upper area of the wing (1) and resting on an adjacent body part (10) is provided on the inner side with multiple stiffening elements (7) in the form of stiffening ribs.

10. Arrangement according to any one of Claims 1 to 9, **characterized in that** a possibly multi-sectional inlay matting (22) is bonded onto the inside contour of the wing (1).

11. Arrangement according to Claim 10, **characterized in that** the inlay matting (22) is a plastic film sheet.

12. Arrangement according to any one of Claims 1 to 11, **characterized in that** the wing (1) has a moulding area (4), which in turn contains one or more bearing faces for the moulding with one or more positioning or locating holes (19), in which locating pins of the moulding engage, one or more stiffening elements (7) in the form of stiffening ribs being applied in the moulding area (4) on the inside contour of the wing (1).

13. Arrangement according to any one of Claims 1 to 12, **characterized in that** the basic structure of the wing (1) is composed of a PUR-RIM system.

14. Arrangement according to any one of Claims 1 to 13, **characterized in that** the adhesive used is a PUR structural adhesive.

## Revendications

1. Agencement d'une aile en plastique et de ses moyens de fixation sur des véhicules automobiles, l'aile (1) s'appuyant à l'aide de moyens de fixation mécaniques sur la carrosserie du véhicule et étant fixée sur celle-ci, et des éléments de liaison, de guidage et/ou de renfort (5, 6, 7) étant attribués à l'aile (1) dans la zone d'une pluralité de points de fixation, lesquels sont collés pour leur part sous forme de composants séparés et préfabriqués sur le contour intérieur de l'aile (1) ou sont traités, respectivement injectés sur le contour intérieur de l'aile (1), **caractérisé en ce que** l'aile (1) présente au moins un élément de liaison (5a, 5b) côté pare-chocs et un élément de liaison (5a, 5b) côté porte du véhicule (5a, 5b), lequel élément de liaison (5a) côté pare-chocs est introduit dans la zone périphérique de l'aile (1) et est réalisé pour le rattachement par coopération de forme au moyen de vis de fixation (9) à une partie de carrosserie (10) voisine et au pare-chocs, l'élément de liaison (5b) côté porte du véhicule est introduit également dans la zone périphérique de l'aile (1) et présente pour la réalisation d'un élément de serrage un logement (13) pour un élément d'accrochage (14) s'engageant dans ledit logement, lequel élément est disposé de façon fixe sur une partie de carrosserie (10) voisine, et au moins un élément de guidage (6) pour une position de montage stable sur le véhicule et pour la réalisation d'un joint uniforme par rapport à la porte du véhicule est attribué à l'aile (1) côté porte du véhicule.

2. Agencement selon la revendication 1,
**caractérisé en ce que**
les éléments de liaison, de guidage et/ou de renfort (5, 6, 7) sont réalisés en plastique et/ou en métal.

3. Agencement selon la revendication 1 ou 2,
**caractérisé en ce que**
les éléments de liaison, de guidage et/ou de renfort (5, 6, 7) sont collés sur toute la surface ou par secteurs partiels sur le contour intérieur de l'aile (1).

4. Agencement selon l'une quelconque des revendications 1 à 3,
**caractérisé en ce que**
les éléments de liaison, de guidage et/ou de renfort (5, 6, 7) sont collés sur le contour intérieur de l'aile (1) de telle sorte qu'aucune marque n'est visible sur le revêtement extérieur de l'aile (1).

5. Agencement selon l'une quelconque des revendications 1 à 4,
**caractérisé en ce que**
l'aile (1) et/ou un ou plusieurs éléments de liaison (5) sont dotés d'un ou de plusieurs alésages (11) et sont fixés à chaque fois au moyen de vis de fixation (9) soutenues de façon élastique sur une partie de carrosserie (10) voisine.

6. Agencement selon la revendication 5,
**caractérisé en ce que**
compte tenu d'une dilatation thermique de l'aile (1), les alésages (11) présentent un diamètre intérieur plus grand que le diamètre extérieur du boulon fileté (19).

7. Agencement selon l'une quelconque des revendications 1 à 6,
**caractérisé en ce que**
un ou plusieurs éléments de liaison (5) sont dotés d'éléments de renfort (7) disposés sur un côté ou sur les deux côtés sous la forme de nervures de renfort, les nervures de renfort dirigées vers le contour intérieur de l'aile (1) étant dans le même temps des nervures d'espacement pour une application de colle uniforme.

8. Agencement selon l'une quelconque des revendications 1 à 7,
**caractérisé en ce que**
un ou plusieurs éléments de renfort (7) se présentant sous la forme de nervures disposées parallèlement au passage de roue (3) sont disposés au moins dans la zone d'un passage de roue (3), plié vers l'intérieur, de l'aile (1) dans le pli (16) et sur le côté intérieur de celui-ci pour le renfort et le rattachement amélioré d'une coque de passage de roue.

9. Agencement selon l'une quelconque des revendications 1 à 8,
**caractérisé en ce que**
au moins un banc d'aile (17), réalisé dans la zone supérieure de l'aile (1) et s'appuyant sur une partie de carrosserie (10) voisine, est doté côté intérieur d'une pluralité d'éléments de renfort (7) se présentant sous la forme de nervures de renfort.

10. Agencement selon l'une quelconque des revendications 1 à 9,
**caractérisé en ce que**
une natte d'insertion (22), éventuellement divisée en plusieurs parties, est collée sur le contour intérieur de l'aile (1).

11. Agencement selon la revendication 10,
**caractérisé en ce que**
la natte d'insertion (22) est un film plastique.

12. Agencement selon l'une quelconque des revendications 1 à 11,
**caractérisé en ce que**
l'aile (1) présente une zone de baguette enjoliveur (4), qui contient pour sa part une ou plusieurs surfaces d'appui pour la baguette enjoliveuse avec un ou plusieurs alésages de positionnement respectivement de logement (19), dans lesquels s'engagent des broches de logement de la baguette enjoliveuse, un ou plusieurs éléments de renfort (7) se présentant sous la forme de nervures de renfort étant appliqués sur le contour intérieur de l'aile (1) dans la zone de la baguette enjoliveuse (4).

13. Agencement selon l'une quelconque des revendications 1 à 12,
**caractérisé en ce que**
la structure de base de l'aile (1) est à base d'un système PUR-RIM.

14. Agencement selon l'une quelconque des revendications 1 à 13,
**caractérisé en ce que**
la colle utilisée est une colle à structure PUR.
